# EUROPEAN PATENT SPECIFICATION

(11) **EP 3 905 610 B1**
(45) Date of publication and mention of the grant of the patent: **03.04.2024**
(21) Application number: 19901849.0
(22) Date of filing: 30.12.2019
(51) Int. Cl.: H04L 65/75, G06F 9/455, H04L 45/00, H04L 45/64, H04L 45/74, H04L 49/00, H04L 65/65

(54) **METHOD AND SYSTEM FOR NETWORK COMMUNICATON**
VERFAHREN UND SYSTEM FÜR NETZWERKKOMMUNIKATION
MÉTHODE ET SYSTÈME POUR UN RÉSEAU DE COMMUNICATION

(30) Priority: 28.12.2018 CN 201811617423
(43) Date of publication of application: 03.11.2021
(73) Proprietor: ZTE Corporation, Shenzhen, Guangdong 518057 (CN)
(72) Inventor: LIU, Yong, Shenzhen, Guangdong 518057 (CN)
(74) Representative: Betten & Resch
(86) International application number: PCT/CN2019/129787
(87) International publication number: WO 2020/135856

(56) References cited:
- CN-A- 106 130 990
- US-A1- 2017 214 550
- US-A1- 2018 270 203
- LASKAWIEC SEBASTIAN ET AL: "New solutions for exposing clustered applications deployed in the cloud", CLUSTER COMPUTING, BALTZER SCIENCE PUBLISHERS, BUSSUM, NL, vol. 22, no. 3, 12 October 2018 (2018-10-12), pages 829-838, XP036864703, ISSN: 1386-7857, DOI: 10.1007/S10586-018-2850-3 [retrieved on 2018-10-12]

## Description

### TECHNICAL FIELD

The present disclosure relates to, but not limited to, communication technology, and in particular, to a method and a system for network communication.

### BACKGROUND

Microservice architecture has become one of the mainstream modes in software system development and deployment. In microservice application scenarios, Docker container is usually used to deploy services for rapid deployment of services and dynamic scaling of instances. Docker is an open source application container engine, allowing developers to package applications into containers. In general scenarios, Kubernetes is usually used to manage and schedule a cluster of containers, while some network plug-ins, for example, Flannel, are used to realize network interconnection between Docker containers. However, in many application scenarios for small and medium-sized enterprises, the service functions of the applications may be relatively monotonous, and the overall capacity requirement is not high. In this case, if Kubernetes and Flannel are used in management and network interconnection for a cluster of Docker containers, the overall workload of the system will be increased, and the whole system will become more complex, the difficulty and cost of operation and maintenance management of the whole system are consequently increased. Therefore, in such an application scenario, usually only Docker basic service is used to deploy application microservices, and a container management interface provided by the Docker basic service is used to implement container management. Docker container network is usually built by using a bridge pattern. When the Docker container needs to expose service ports, ports in the Docker container are mapped to ports of a host computer through port mapping and exposed at the startup of the Docker container. The implementation mechanism of this port mapping is realized by adding a rule chain to the iptables.

However, in the case of multi-port exposure in the Docker container, especially in some data transmission scenarios, such as video conferencing, video analysis, media server and the like, data is transmitted based on User Datagram Protocol (UDP), and usually at least a pair of ports need to be exposed for a channel of data. If the port mapping is still used, port management will become more complicated. An actual verification test shows that the port mapping and packet forwarding based on iptables are extremely inefficient and give rises to an increased delay, the business functions of the applications in the containers are seriously affected.

In addition, the Docker container itself provides docker-proxy to realize data packet forwarding for container applications. However, its implementation mechanism is to provide each container port port-mapped with a docker-proxy process for data packet forwarding, in the case of a large number of port mappings, a large number of docker-proxy processes need to be run, the circumstances of inefficiency and high difficulty in operation and maintenance management may also occur.

US2018270203A1 discloses a device can determine that a container is deployed in a front-end of a private network, the container can include a self-contained execution environment.

US2017214550A1 discloses a virtual network for containers and provides a method including sending, by a container to a cloud exchange via an application programming interface exposed by an interconnection platform of the cloud exchange, container registration data for the container.

### SUMMARY

A method and a system for network communication are provided, which can reduce the complexity of port management of a Docker container and improve the efficiency of data transmission.

The invention is defined in the appended claims.

According to a first aspect of the present disclosure, a method for network communication is provided, including: determining a data forwarding rule of a Docker container by a data distribution unit deployed in the Docker container, where a pair of first ports and a second port of the Docker container are mapped to ports of a host computer in which the Docker container is located, and at least one channel of data is transmitted by the pair of first ports; according to the data forwarding rule, forwarding a data packet received via first ports to an application deployed in the Docker container by the data distribution unit, or forwarding a data packet sent by the application deployed in the Docker container to an external device via the first port; acquiring communication link information of each channel of data; wherein, determining the data forwarding rule of the Docker container comprises: determining, according to the communication link information of each channel of data, the data forwarding rule of the Docker container; and wherein acquiring the communication link information of each channel of data comprises: determining a source address and a source port for a channel of data to be received via the first ports, by performing signaling interaction with the external device via the second port; acquiring an address and a port of the Docker container to which the application is bound, from the application to receive the channel of data; and determining the communication link information of the channel of data according to the source address and the source port for the channel of data, and the address and the port of the Docker container to which the application is bound; or, receiving a request message sent by the external device via the second port, and parsing, a destination address and a destination port for a channel of data to be sent via the first ports, and an application to send the channel of data, from the request message; acquiring the address and the port of the Docker container to which the application is bound, from the application to send the channel of data; and determining the communication link information of the channel of data according to the destination address and the destination port of the channel of data, and the address and the port of the Docker container to which the application is bound.

According to a second aspect of the present disclosure, a system for network communication is provided, including a data distribution unit and a network application unit. The data distribution unit and the network application unit are deployed in a Docker container, a pair of first ports and a second port of the Docker container are mapped to ports of a host computer in which the Docker container is located, and the network application unit includes at least one application, and at least one channel of data is transmitted by the pair of first ports. The data distribution unit is configured to: determine a data forwarding rule of the Docker container; and according to the data forwarding rule, forward a data packet received via first ports to an application in the network application unit, or forward a data packet sent by the application in the network application unit to an external device via the first port; a signaling processing unit (110), configured to acquire communication link information of each channel of data and send the communication link information to the data distribution unit (112); wherein the data distribution unit (110) is configured to determine the data forwarding rule of the Docker container (11) according to the communication link information of each channel of data; and wherein the signaling processing unit (110) is configured to acquire the communication link information of each channel of data by: determining a source address and a source port for a channel of data to be received via the first ports by performing signaling interaction with the external device (10) via the second port; acquiring, from an application to receive the channel of data, an address and a port of the Docker container (11) to which the application is bound; and determining the communication link information of the channel of data according to the source address and the source port for the channel of data, and the address and the port of the Docker container (11) to which the application is bound; or, receiving a request message sent by the external device (10) via the second port, and parsing a destination address and a destination port of a channel of data to be sent via the first ports, and an application to send the channel of data, from the request message; acquiring, from the application to send the channel of data, the address and the port of the Docker container (11) to which the application is bound; and determining the communication link information of the channel of data according to the destination address and the destination port of the channel of data, and the address and the port of the Docker container (10) to which the application is bound.

According to a third aspect of the present disclosure, a network device is provided, including a processor and a memory. The memory is configured to store a network communication program which, when executed by the processor, causes the processor to perform the method for network communication described above.

According to a fourth aspect of the present disclosure, a computer readable medium storing a network communication program is provided. The network communication program, when executed by a processor, causes the processor to perform the method for network communication described above.

### BRIEF DESCRIPTION OF DRAWINGS

Fig. 1 is a schematic diagram of a system for network communication according to an embodiment of the present disclosure;
Fig. 2 is an implementation flow diagram of the system for network communication according to an embodiment of the present disclosure;
Fig. 3 is a flow chart of a method for network communication according to an embodiment of the present disclosure;
Fig. 4 is an exemplary flow chart of a method for network communication according to another embodiment of the present disclosure;
Fig. 5 is an exemplary flow chart of a method for network communication according to yet another embodiment of the present disclosure;
Fig. 6 is an exemplary flow chart of a method for network communication according to yet another embodiment of the present disclosure;
Fig. 7 is an exemplary flow chart of a method for network communication according to yet another embodiment of the present disclosure; and
Fig. 8 is a schematic diagram of a network device according to an embodiment of the present disclosure.

### DETAILED DESCRIPTION

The steps shown in the flow charts of the drawings may be performed in a computer system containing a set of computer-executable instructions. Moreover, although a logical order is shown in the flow charts, in some cases, the steps shown or described may be performed in a different order than here.

It should be noted that, the terms "first", "second" and the like in the present disclosure are used to distinguish different objects, rather than to describe a specific order.

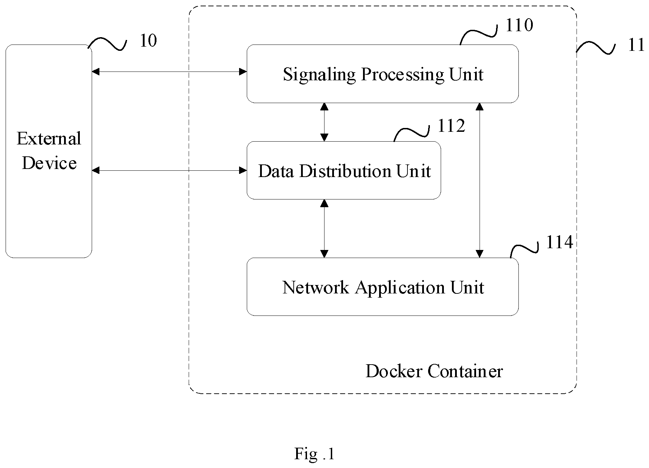

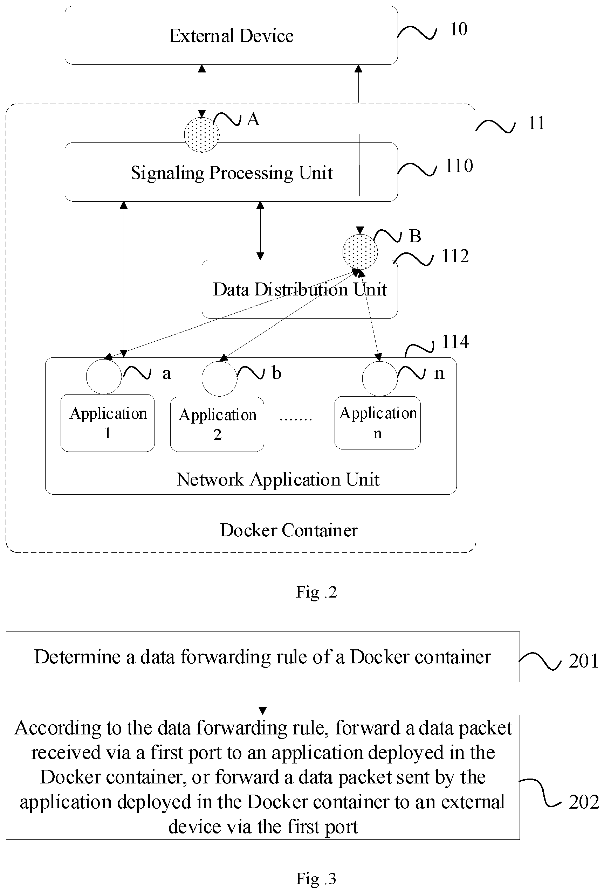

Fig. 1 is a schematic diagram of a system for network communication according to an embodiment of the present disclosure. Fig. 2 is an implementation flow diagram of the system for network communication according to an embodiment of the present disclosure. As shown in Figs. 1 and 2, the system for network communication of the embodiment includes a data distribution unit 112 and a network application unit 114 which are deployed in a Docker container 11. The Docker container 11 can be deployed on a network device (which may be called a host computer), and multiple Docker containers can be deployed on one network device at the same time. At least one application may be deployed in the Docker container 11, for example, different network applications can be instantiated according to different business scenarios. As shown in Fig. 2, the network application unit 114 may include at least one application, such as application 1, application 2 and application n in Fig. 2, where application 1 is bound to port a, application 2 is bound to port b and application n is bound to port n.

In this embodiment, a pair of first ports (illustrated by port B in Fig. 2) of the Docker container 11 are mapped to ports of a host computer in which the Docker container is located. The pair of first ports may include a Realtime Transport Protocol (RTP) port and a Realtime Transport Control Protocol (RTCP) port, and the pair of first ports of the Docker container 11 is configured to transmit data. As an example, the Docker container 11 may expose a pair of first ports on the host computer in which the Docker container 11 is located through port mapping at startup, and the exposed pair of first ports is configured to receive a data packet from an external device 10, or send a data packet to the external device 10. It should be noted that at the startup of the Docker container 11, the Docker container 11 may initialize a corresponding relationship between an address of the Docker container and an Internet Protocol (IP) address of the host computer in which the Docker container 11 is located, and a mapping relation between the first ports of the Docker container 11 and the ports on the host computer in which the Docker container 11 is located. Based on this, the Docker container 11 can realize data interaction with the external device 10.

In this embodiment, the data distribution unit 112 is configured to determine a data forwarding rule of the Docker container 11; and according to the data forwarding rule, forward a data packet received via a first port (for example, port B in Fig. 2) to an application in the network application unit 114, or forward a data packet sent by the application in the network application unit 114 to the external device 10 via the first port.

In this embodiment, the external device 10 may include other objects besides the Docker container 11, such as other network devices or other Docker containers. However, the present disclosure is not limited to this.

In this embodiment, the Docker container 11 may only need to expose a pair of first ports, and the exposed pair of first ports is configured to transmit data. No matter how many channels of data exist between the external device 10 and the network application unit 114, data will be transmitted via the first ports, and the exposed ports will not be dynamically increased, only the data forwarding rule of the Docker container 11 will be dynamically changed. When a channel of data is added, the data distribution unit 112 may add a data forwarding rule, while when a channel of data is deleted, the data distribution unit 112 may delete a corresponding data forwarding rule.

In an embodiment, the data forwarding rule may be used to record information of a data source and a data destination of each channel of data, where the data source or the data destination may be an application in the network application unit 114.

In an embodiment, the information of the data source may include a source address and a source port; and the information of the data destination may include a destination address and a destination port; where the source port or the destination port may be a port to which an application in the network application unit 114 is bound. The present disclosure is not limited to this. For example, in other implementations, in the case that the data source is an application in the network application unit, the information of the data source may include: an address of the Docker container in which the application is located, a port to which the application is bound, and an Identity Document (ID) of the application.

As an example, in the case that the source address and the source port of a channel of data are an IP address and a port of an external device, the destination address of the channel of data may be the IP address of the host computer in which the Docker container is located, and the destination port of the channel of data may be the port to which the application deployed in the Docker container is bound. As an example, in the case that the destination address and the destination port of a channel of data are an IP addresses and a port of an external device, the source address of the channel of data may be the IP address of the host computer in which the Docker container is located, and the destination port of the channel of data may be the port to which the application deployed in the Docker container is bound.

In an embodiment, the data distribution unit 112 may be configured to forward, according to the data forwarding rule, the data packet received via the first port to the application deployed in the Docker container 11 by: determining the destination port corresponding to both the source address and the source port carried by the data packet received via the first port by querying the data forwarding rule; and forwarding the data packet to the application bound to the destination port in the network application unit 114.

In this embodiment, as shown in Fig. 2, the data distribution unit 112 receives a data packet carrying a source address and a source port via port B. In the case that there is a record of a destination address and a destination port corresponding to the source address and the source port in the data forwarding rule, the data packet is forwarded in the Docker container 11 according to the queried destination port. For example, in the case that there is a record in the data forwarding rule that the destination port corresponding to the source address and the source port is port a, the data distribution unit 112 forwards the received data packet to the application 1 bound to the port a; or, in the case that there is no record of the source address and the source port in the data forwarding rule, the received data packet is directly discarded.

In an exemplary embodiment, the data distribution unit 112 can forward, according to the data forwarding rule, the data packet sent by the application deployed in the Docker container 11 to the external device 10 via the first port by: determining an IP address and a port of the external device corresponding to the port to which the application sending the data packet in the Docker container is bound by querying the data forwarding rule; and forwarding the data packet to the external device via the first port.

In this exemplary embodiment, as shown in Fig. 2, after receiving the data packet sent by the application 1 in the network application unit 114, the data distribution unit 112 queries whether there is a destination address and a destination port corresponding to the port a from the data forwarding rule. In the case where it is queried that the IP address and port of the external device 10 correspond to the port a, the data distribution unit 112 forwards the data packet to the external device 10 via the port B; or, in the case that there is no queried record corresponding to the port a, the received data packet is directly discarded.

In an embodiment, as shown in Figs. 1 and 2, the system for network communication according to this embodiment may further include a signaling processing unit 110 configured to acquire communication link information of each channel of data and send the communication link information to the data distribution unit 112. The data distribution unit 112 may be configured to determine the data forwarding rule of the Docker container 11 according to the communication link information of each channel of data.

In this embodiment, a second port (e.g., port A in Fig. 2) of the Docker container 11 is mapped to a port of the host computer in which the Docker container 11 is located, and the second port is configured to transmit signaling. The signaling processing unit 110 may be configured to acquire the communication link information of each channel of data by one of the following modes.

Mode 1: by performing signaling interaction with an external device (such as the external device 10) via the second port, determining a source address and a source port (e.g., the IP address and the port of the external device 10) of any channel of data to be received via the first port; acquiring, from the application for receiving the channel of data, an address and a port of the Docker container to which the application is bound; and determining the communication link information of the channel of data according to the source address and the source port of the channel of data, and the address and the port of the Docker container to which the application is bound;

Mode 2: receiving a request message sent by the external device via the second port, and parsing a destination address and a destination port (e.g., the IP address and the port of the external device 10) of any channel of data to be sent via the first port, and an application for sending the channel of data, from the request message; acquiring the address and the port of the Docker container to which the application is bound from the application for sending the channel of data; and determining the communication link information of the channel of data according to the destination address and the destination port of the channel of data, and the address and the port of the Docker container to which the application is bound.

In this embodiment, the signaling processing unit 110 is configured to interact with an external device (e.g., the external device 10) to complete data negotiation through standard signaling which may generally include Session Initiation Protocol (SIP), Real Time Streaming Protocol (RTSP), Media Gateway Control Protocol (MGCP), etc. A signaling transmission channel can support Transmission Control Protocol (TCP), User Datagram Protocol (UDP) and other modes. Since the signaling processing unit 110 needs to communicate with an external device (e.g., the external device 10), a port (i.e., the above-mentioned second port, e.g., port A in Fig. 2) for transmitting signaling is exposed to the host computer through port mapping. For the whole Docker container, as there is usually only one port for signaling transmission, there is no impact on data packet forwarding by the host computer based on iptables rules.

In this embodiment, the data distribution unit 112 is configured to communicate with the external device 10 through a standard data transmission protocol, receiving and forwarding the data packet based on the data forwarding rule. The data distribution unit 112 may expose a pair of ports (i.e., the first ports mentioned above, e.g., port B in Fig. 2) for data packet transmission on the host computer through port mapping. For the whole Docker container, only a pair of ports needs to be exposed for data transmission, so there is no impact on data packet forwarding by the host computer based on iptables rules. The data forwarding rule can be created or updated according to the communication link information sent by the signaling processing unit 110. When receiving the data packet, the data distribution unit 112 can determine, according to the source address and the source port carried by the data packet, which port in the Docker container or which external device to forward the data packet to by querying the data forwarding rule.

In this embodiment, the network application unit 114 is configured to interact with the data distribution unit 112, and can be instantiated into different network applications (for example, application 1, application 2, and application n) according to different business scenarios. The network application unit 114 can receive a data packet forwarded by the data distribution unit 112 or send a data packet to the data distribution unit 112. The network application unit 114 can be started with the Docker container 11, or can be created by other units (for example, the signaling processing unit 110). The network application unit 114 and the data distribution unit 112 may usually need to bind a pair of ports (including an RTP port and an RTCP port) for each channel of data (for example, video or audio data). For example, in Fig. 2, application 1 is bound to port a, application 2 is bound to port b, and application n is bound to port n. In to the case of sending and receiving multiple channels of data, multiple pairs of ports may need to be bound. The network application unit 114 and the data distribution unit 112 can communicate with each other through a socket in the Docker container.

The implementation flow of the system for network communication according to the embodiment is illustrated by an example based on Fig. 2. In this example, the signaling processing unit 110 may initiate a data session establishment request from the port A, which may be SIP, RTSP, MGCP or other protocols, and record the source address and source port (e.g., IP address and port number of the external device 10) of opposite end data after the signaling negotiation is completed. In the negotiation signaling, a receiving address of local end data may be the IP address of the host computer in which the Docker container is located and the port B of the Docker container exposed on the host computer. Then, the signaling processing unit 110 informs the network application unit 114, and the network application unit 114 creates a new application 1 bound to the port a. The new application 1 informs the signaling processing unit 110 of the address and the port a of the Docker container to which the new application 1 is bound for data processing. The signaling processing unit 110 informs the data distribution unit 112 of the data address pair to be forwarded (including the source address and the source port of the peer end data, and the address and the port a of the Docker container to which the data destination application 1 is bound). The data distribution unit 112 creates, according to the received information, a data distribution mapping table, in which the following corresponding relationships are recorded: the source address, the source port, the IP address of the host computer in which the Docker container is located, and the port to which the application 1 is bound, as a data forwarding rule. It should be noted that since the Docker container initializes the corresponding relationship between the address of the Docker container and the IP address of the host computer in which the Docker container is located at startup, the IP address of the host computer in which the Docker container is located can be determined based on the address of the Docker container and the above initialized corresponding relationship. Then, the data distribution unit 112 starts to receive the data packet, queries the data forwarding rule in the data distribution mapping table according to the source address and the source port carried by the data packet, and forwards the received data packet to the port a in the Docker container according to the queried result. After receiving the data packet forwarded by the data distribution unit 112, the application 1 bound to the port a can perform corresponding services, such as video analysis tasks.

Through the system for network communication of this embodiment, iptables-based forwarding and application distribution are combined, allowing the Docker container to realize multi-channel data transmission with a pair of ports exposed only. For small-scale government and enterprise application scenarios, when Docker container is used to deploy microservices, with the system for network communication of this embodiment, the complexity of Docker container port management is reduced, the efficiency of data packet transmission is improved, and thus the operation and maintenance management is facilitated and the reliability is improved.

Fig. 3 is a flow chart of a method for network communication according to an embodiment of the present disclosure. The method for network communication of this embodiment can be applied to a Docker container deployed on a host computer, where a pair of first ports of the Docker container are mapped to ports of the host computer in which the Docker container is located. For the description of the Docker container and the first ports, reference is made to the above description of the system for network communication, which will not be repeated here.

As shown in Fig. 3, the method for network communication of this embodiment includes step S201 and step S202.

At step S201, a data forwarding rule of a Docker container is determined.

At step S202, according to the data forwarding rule, a data packet received via a first port is forwarded to an application deployed in the Docker container, or a data packet sent by the application deployed in the Docker container is forwarded to an external device via the first port.

In an embodiment of the present disclosure, a pair of first ports of the Docker container are mapped to ports of a host computer in which the Docker container is located. According to the data forwarding rule of the Docker container, the data packet received via the first port is forwarded to the application deployed in the Docker container, or the data packet sent by the application deployed in the Docker container is forwarded to the external device via the first ports. In this embodiment, the Docker container may only need to expose a pair of first ports on the host computer for data packet transmission, which not only reduces the complexity of port management, but also improves the efficiency of data transmission.

In an embodiment, the data forwarding rule can be configured to record information of a data source and a data destination of each channel of data, where the data source or the data destination is the application deployed in the Docker container.

In an embodiment, the information of the data source may include a source address and a source port, and the information of the data destination may include a destination address and a destination port, where the source port or the destination port is a port to which the application deployed in the Docker container is bound. However, the present disclosure is not limited to this. For example, in other implementations, if the data source is an application in the network application unit, the information of the data source may include the address of the Docker container in which the application is located, the port to which the application is bound, and the ID of the application.

In an embodiment, in step S202, forwarding, according to the data forwarding rule, the data packet received via the first port to the application deployed in the Docker container may include: determining the destination port corresponding to the source address and the source port carried by the data packet received via the first ports by querying the data forwarding rule; and forwarding the data packet to the application bound to the destination port in the Docker container.

As an example, after a data packet carrying a source address and a source port is received via the first port and there is a record of a destination address and a destination port corresponding to the source address and the source port in a data forwarding rule, the data packet is forwarded in the Docker container according to the queried destination port. For example, in Fig. 2, if there is a record in the data forwarding rule that the destination port corresponding to the source address and the source port (e.g., the IP address and the port of the external device 10) is port a, the received data packet can be forwarded to the application 1 bound to the port a; or, if there is no records of the source address and the source port in the data forwarding rule, the received data packet is directly discarded.

In an embodiment, in step S202, according to the data forwarding rule, forwarding the data packet sent by the application deployed in the Docker container to the external device via the first port may include: determining the IP address and the port of the external device corresponding to the port to which the application sending the data packet in the Docker container is bound by querying the data forwarding rule; and forwarding the data packet to the external device via the first port. In this embodiment, the source port of a channel of data recorded in the data forwarding rule may be the port to which the application deployed in the Docker container is bound, and the destination address and the destination port of the channel of data may be the IP address and the port of the external device.

As an example, after receiving a data packet sent by an application deployed in the Docker container, whether there is a destination address and a destination port corresponding to the port to which the application is bound is queried from the data forwarding rule; if there is a queried record of corresponding destination address and port, such as the IP address and the port of the external device, the data packet is forwarded to the external device via the first port; and if there is no corresponding records, the received data packet is discarded directly.

In an embodiment, before step S201, the method for network communication may further include: acquiring communication link information of each channel of data. In this case, step S201 may include: determining the data forwarding rule of the Docker container according to the communication link information of each channel of data.

In an embodiment, a second port of the Docker container is mapped to a port of the host computer in which the Docker container is located; and acquiring the communication link information of each channel of data may include one of the followings:
Mode 1: performing signaling interaction with an external device (such as the external device 10) via the second port; determining a source address and a source port (e.g., the IP address and the port of the external device 10) of any channel of data to be received via the first port; acquiring, from the application for receiving the channel of data, an address and a port of the Docker container to which the application is bound; and determining the communication link information of the channel of data according to the source address and the source port of the channel of data, and the address and the port of the Docker container to which the application is bound; and
Mode 2: receiving, via the second port, a request message sent by the external device; parsing, from the request message, a destination address and a destination port (e.g., the IP address and the port of the external device 10) of any channel of data to be sent via the first port, and an application for sending the channel of data; acquiring, from the application for sending the channel of data, the address and the port of the Docker container to which the application is bound; and determining the communication link information of the channel of data according to the destination address and the destination port of the channel of data, and the address and the port of the Docker container to which the application is bound.

For the description of the second port, reference is made to the relevant description of the system for network communication described above, which will not be repeated here.

In this embodiment, the Docker container exposes the first ports and the second port through port mapping during initialization. The first ports are configured to transmit data and the second port is configured to transmit signaling. For the whole Docker container, as there is usually only one port for signaling transmission, there is no impact on data packet forwarding by the host computer based on iptables rules. For the whole Docker container, as only a pair of ports (the first ports) may need to be exposed for data transmission, there is no impact on data packet forwarding by the host computer based on iptables rules.

In this embodiment, the Docker container may only need to expose a pair of first ports for data transmission. No matter how many channels of data exist between the application deployed in the Docker container and the external device, data will be transmitted via the first ports, and the exposed ports will not be dynamically increased, only the data forwarding rule of the Docker container will be dynamically changed. When a channel of data is added, a record may be added in the data forwarding rule, while when a channel of data is deleted, a record may be deleted in the data forwarding rule.

Through the method for network communication of this embodiment, iptables-based forwarding and application distribution are combined, allowing the Docker container to realize multi-channel data transmission with only a pair of ports being exposed. For small-scale government and enterprise application scenarios, when Docker container is used to deploy microservices, with the system for network communication of this embodiment, the complexity of Docker container port management is reduced and the efficiency of data packet transmission is improved, and thus the operation and maintenance management is facilitated and the reliability is improved.

The method and the system for network communication of the present disclosure will be described by several embodiments with reference to Figs. 1 and 2.

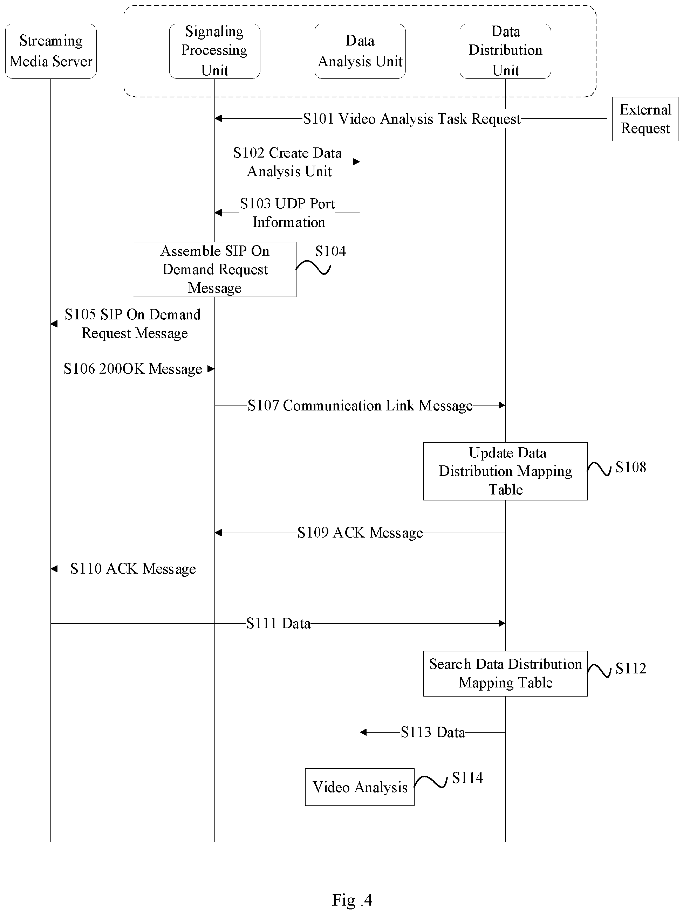

Fig. 4 is an exemplary flow chart of a method for network communication according to another embodiment of the present disclosure. The method can be applied to the following scenarios: the system for network communication pulls data stream from a GB28181 server (i.e., streaming media server) through Session Initiation Protocol (SIP), and the data stream is used for video analysis tasks. In this example, the network application unit may include a data analysis unit.

As shown in Fig. 4, the method for network communication in this example may include steps S101 to S114.

At step S101, a signaling processing unit receives a video analysis task request. For example, the video analysis task request may be triggered by a click operation on a web page corresponding to the system for network communication. However, the present disclosure is not limited to this.

At step S102, after receiving the video analysis task request, the signaling processing unit creates a data analysis unit.

At step S103, the data analysis unit sends the address of the Docker container and UDP port information (e.g., port number) to which the data analysis unit is bound to the signaling processing unit, and the signaling processing unit records the address of the Docker container and the UDP port information (e.g., port number) to which the data analysis unit is bound.

At step S104, the signaling processing unit parses the video analysis task request and assembles a standard SIP on demand request message. The SIP on demand request message includes a Session Description Protocol (SDP) message, and the SDP message includes a destination address and a destination port number. In this example, the destination address is the IP address of the host computer in which the Docker container is located, and the destination port number is the port number of the first port mapped by docker container to the host computer (e.g., the port number of port B in Fig. 2).

At step S105, the signaling processing unit sends the SIP on demand request message to the streaming media server.

At step S106, while the streaming media server is ready, the streaming media server sends a 200POK message to the signaling processing unit, which also includes an SDP message, and the SDP message includes a source address and a source port number of a requested video data. In this example, the source address and the source port number are an IP address and a port number of a camera.

At step S107, the signaling processing unit assembles the address and the port number of the Docker container to which the data analysis unit is bound with the IP address and the port number of the corresponding camera into a communication link message, and sends the communication link message to a data distribution unit.

At step S108, the data distribution unit receives the communication link message, and updates a data distribution mapping table according to the communication link message, that is, a new data forwarding rule is added to the data distribution mapping table. For example, the corresponding relationship between the IP address of the host computer in which the data analysis unit is located and the port number bound in the Docker container and the IP address and the port number of the corresponding camera can be recorded. The IP address of the host computer in which the data analysis unit is located can be determined according to the address of the Docker container to which the data analysis unit is bound and the corresponding relationship between the address of the Docker container established during the initialization of the Docker container and the IP address of the host computer in which the Docker container is located.

At step S109, after updating the data distribution mapping table, the data distribution unit sends an Acknowledge character (ACK) message to the signaling processing unit.

At step S110, the signaling processing unit sends the ACK message to the streaming media server.

At step S111, after receiving the ACK message, the streaming media server sends the data of the corresponding camera to the data distribution unit. The streaming media server can send the data of the camera according to the destination address and the destination port number carried in the SIP on demand request message (that is, the IP address of the host computer in which the Docker container is located and the port number of the first ports mapped by the Docker container to the host computer).

At step S112, after receiving the data packet via the first ports, the data distribution unit searches the data distribution mapping table. In the case that the destination port number corresponding to both the source address and the source port number carried by the data packet can be found in the data distribution mapping table, the data distribution unit forwards the received data packet to the data analysis unit corresponding to the destination port number at step S113; or, in the case that the destination port number corresponding to both the source address and the source port number carried by the data packet cannot be found in the data distribution mapping table, the data packet is discarded directly.

At step S114, after receiving the data packet, the data analysis unit executes the video data analysis task.

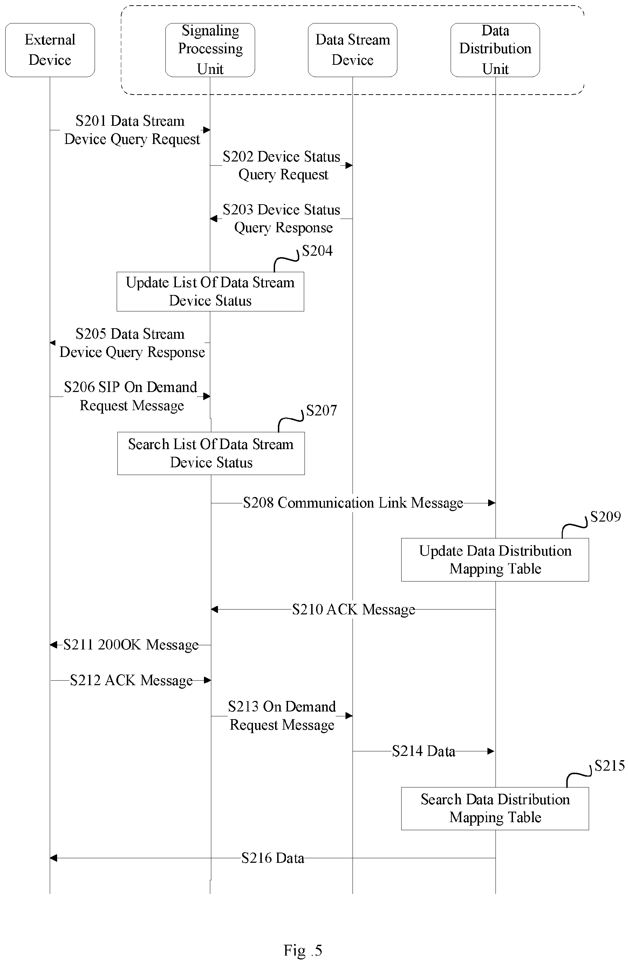

Fig. 5 is an exemplary flow chart of a method for network communication according to yet another embodiment of the present disclosure. The method can be applied to the following scenarios: as a data stream server, the system for network communication supports GB28181 protocol, and sends data stream to an external device in response to a request of the external device. In this example, the network application unit may include a data stream device.

As shown in Fig. 5, the method for network communication in this example may include steps S201 to S216.

At step S201, a signaling processing unit receives a data stream device query request message sent by an external device.

At step S202, the signaling processing unit sends a device status query request message to all managed data stream devices.

At step S203, the data stream device in a working state (i.e., normal data stream device) returns a device status query response message to the signaling processing unit. The device status query response message returned by any normal data stream device may include an ID of the data stream device, an address and a port number of a Docker container to which the data stream device is bound.

At step S204, the signaling processing unit updates a list of data stream device status according to the received device status query response message, and assembles the list of data stream device status in a working state into a data stream device query response message. The IDs of all data stream devices in a working state can be recorded in the list of data stream device status in a working state.

At step S205, the signaling processing unit sends the data stream device query response message to the external device.

At step S206, the signaling processing unit receives a SIP on demand request message sent by the external device.

At step S207, the signaling processing unit parses out the IP address and the port number of the external device and the ID of the data stream device to be on demand from the SIP on demand request message. The ID of the data stream device to be on demand is queried in the list of data stream device status. When the data stream device corresponding to the ID is in a working state, the signaling processing unit assembles the IP address and the port number of the external device with the address and the port number of the Docker container to which the data stream device corresponding to the ID is bound into a communication link message, and executes step S208; otherwise (that is, the data stream device corresponding to the ID is in a non-working state (that is, there is an exception)), the signaling processing unit feeds back an exception notification to the external device.

At step S208, the signaling processing unit sends the communication link message to a data distribution unit.

At step S209, the data distribution unit parses the communication link message and updates a data distribution mapping table according to the communication link message. That is, a new data forwarding rule is added to the data distribution mapping table. For example, the IP address and the port number of the external device, and the corresponding relationship between the IP address of the host computer bound to the ID of the data stream device to be on demand and the port number bound in the Docker container can be recorded. The IP address of the host computer in which the data stream device is located can be determined according to the address of the Docker container to which the data stream device is bound and the corresponding relationship between the address of the Docker container established during the initialization of the Docker container and the IP address of the host computer in which the Docker container is located.

At step S210, after updating the data distribution mapping table, the data distribution unit returns an ACK message to the signaling processing unit.

At step S211, after receiving the ACK message, the signaling processing unit sends a 200OK message to the external device, which may include a SDP message, and the SDP message may include the ID of the data stream device to be on demand.

At step S212, the external device sends the ACK message to the signaling processing unit.

At step S213, after receiving the ACK message, the signaling processing unit sends an on-demand request message to the data stream device corresponding to the ID to be on demand.

At step S214, after receiving the on-demand request message, the data stream device corresponding to the ID to be on demand sends data to the data distribution unit.

At step S215, after receiving the data packet, the data distribution unit searches the data distribution mapping table. In the case that the destination address and the destination port number corresponding to both the source address and the source port number carried by the data packet can be found in the data distribution mapping table, the data distribution unit forwards the data packet to the corresponding external device at step S216; or, in the case that the destination address and the destination port number corresponding to both the source address and the source port number carried by the data packet cannot be found in the data distribution mapping table, the data packet is directly discarded.

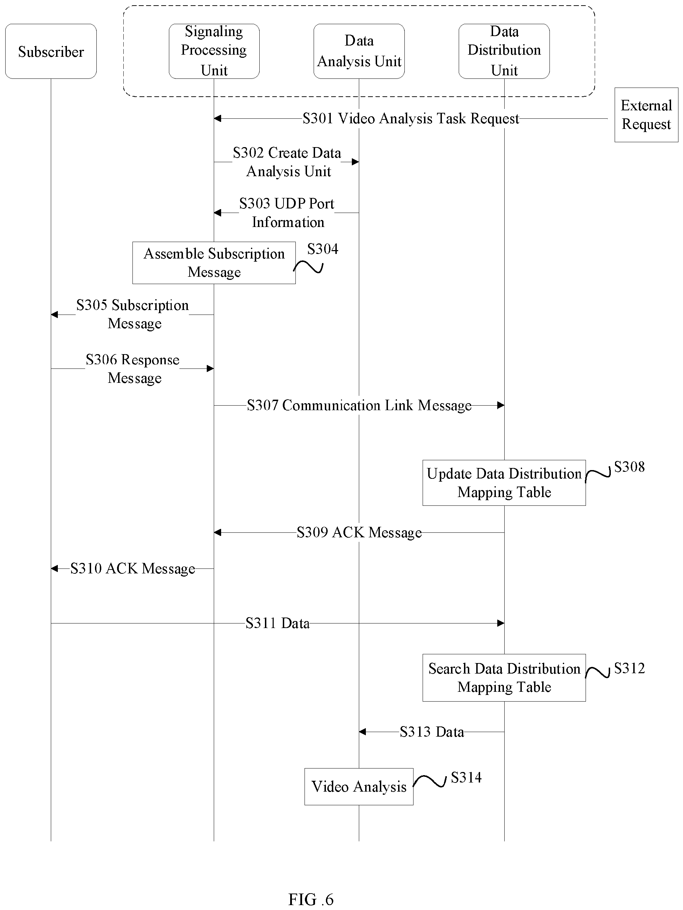

Fig. 6 is an exemplary flow chart of a method for network communication according to another embodiment of the present disclosure. The method can be applied to the following scenarios: a system for network communication acquires a data stream through GAT1400 protocol for a video analysis task. In this example, the network application unit may include a data analysis unit.

As shown in Fig. 6, the method for network communication in this example may include steps S301 to S314.

At step S301, a signaling processing unit receives a video analysis task request. For example, the video analysis task request may be triggered by a click operation on a web page corresponding to the system for network communication. However, the present disclosure is not limited to this.

At step S302, after receiving the video analysis task request, the signaling processing unit creates a data analysis unit.

At step S303, the data analysis unit sends the address of the Docker container and UDP port information (e.g., port number) to which the data analysis unit is bound to the signaling processing unit, and the signaling processing unit records the address of the Docker container and the UDP port information (e.g., port number) to which the data analysis unit is bound.

At step S304, the signaling processing unit parses the video analysis task request and assembles a subscription message. The subscription message may include a destination address and a destination port number. In this example, the destination address is the IP address of the host computer in which the Docker container is located, and the destination port number is the port number of the first port mapped by docker container to the host computer (e.g., the port number of port B in FIG. 2).

At step S305, the signaling processing unit sends the subscription message, such as HTTP POST /VIID/Subscribes, to a subscriber.

At step S306, a subscribed view library returns a response message of whether the subscription is successful or not to the signaling processing unit, where the response message carries a source address and a source port number of the subscribed video data. In this example, the source address and the source port number of the subscribed video data are the IP address and the port number of the subscribed view library.

At step S307, the signaling processing unit assembles the address and the port number of the Docker container to which the data analysis unit is bound and the IP address and the port number of the corresponding view library into a communication link message in the case of a successful subscription, and sends the communication link message to a data distribution unit.

At step S308, the data distribution unit receives the communication link message and updates a data distribution mapping table according to the communication link message. That is, a new data forwarding rule is added to the data distribution mapping table. For example, the corresponding relationship between the IP address of the host computer in which the data analysis unit is located and the port number bound in the Docker container and the IP address and the port number of the subscribed view library can be recorded. The IP address of the host computer in which the data analysis unit is located can be determined according to the address of the Docker container to which the data analysis unit is bound and the corresponding relationship between the address of the Docker container established during the initialization of the Docker container and the IP address of the host computer in which the Docker container is located.

At step S309, after updating the data distribution mapping table, the data distribution unit sends an ACK message to the signaling processing unit.

At step S310, the signaling processing unit sends the ACK message to the view library.

At step S311, after receiving the ACK message, the view library sends the subscribed data to the data distribution unit. The view library can send a data packet according to the destination address and the destination port number carried in the subscription message (that is, the IP address of the host computer in which the Docker container is located and the port number of the first port mapped by the Docker container to the host computer).

At step S312, after receiving the data packet, the data distribution unit searches the data distribution mapping table. In the case that the destination port number corresponding to both the source address and the source port number carried by the data packet can be found in the data distribution mapping table, the data distribution unit forwards the data packet to the data analysis unit corresponding to the destination port number at step S313; or, in the case that the destination port number corresponding to both the source address and the source port number carried by the packet cannot be found in the data distribution mapping table, the data packet is discarded directly.

At step S314, after receiving the data packet, the data analysis unit executes the video data analysis task.

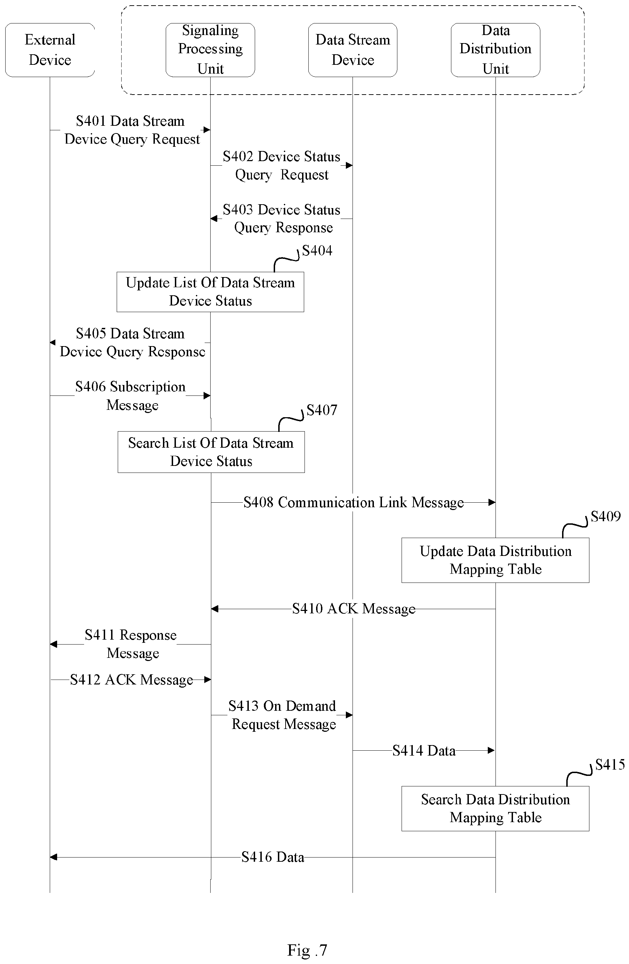

Fig. 7 is an exemplary flow chart of a method for network communication according to still yet another embodiment of the present disclosure. The method can be applied to the following scenarios: as a data stream server, the system for network communication supports GAT1400 protocol, and send a data stream to an external device in response to a request of the external device. In this example, the network application unit may include a data stream device.

As shown in Fig. 7, the method for network communication in this example may include steps S401 to S416.

At step S401, a signaling processing unit receives a data stream device query request message sent by an external device.

At step S402, the signaling processing unit sends a device status query request message to all managed data stream devices.

At step S403, the data stream device in a working state (i.e., normal data stream device) returns a device status query response message to the signaling processing unit. The device status query response message returned by any normal data stream device may include an ID of the data stream device, an address and a port number of a Docker container to which the data stream device is bound.

At step S404, the signaling processing unit updates a list of data stream device status according to the received device status query response message, and assembles the list of data stream device status in a working state into a data stream device query response message. The IDs of all data stream devices in a working state can be recorded in the list of data stream device status in a working state.

At step S405, the signaling processing unit sends the data stream device query response message to the external device.

At step S406, the signaling processing unit receives a subscription message from the external device, such as an HTTP POST /VIID/Subscribes message.

At step S407, the signaling processing unit parses out the IP address and the port number of the external device and the ID of the data stream device to be on demand from the subscription message. The signaling processing unit queries the ID of the data stream device to be on demand in the list of data stream device status. When the data stream device corresponding to the ID is in a working state, the signaling processing unit assembles the IP address and the port number of the external device with the address and the port number of the Docker container to which the data stream device corresponding to the ID is bound into a communication link message, and executes step S408; otherwise (that is, the data stream device corresponding to the ID is in a non-working state (that is, there is an exception)), the signaling processing unit feeds back an exception notification to the external device.

At step S408, the signaling processing unit sends the communication link message to a data distribution unit.

At step S409, the data distribution unit parses the communication link message and updates a data distribution mapping table according to the communication link message. That is, a new data forwarding rule is added to the data distribution mapping table. For example, the IP address and the port number of the external device, and the corresponding relationship between the IP address of the host computer bound to the ID of the data stream device to be on demand and the port number bound in the Docker container can be recorded. The IP address of the host computer in which the data stream device is located can be determined according to the address of the Docker container to which the data stream device is bound and the corresponding relationship between the address of the Docker container established during the initialization of the Docker container and the IP address of the host computer in which the Docker container is located.

At step S410, after updating the data distribution mapping table, the data distribution unit returns an ACK message to the signaling processing unit.

At step S411, after receiving the ACK message, the signaling processing unit sends a subscription response message to the external device, which may include the ID of the data stream device to be on demand.

At step S412, the external device sends the ACK message to the signaling processing unit.

At step S413, after receiving the ACK message, the signaling processing unit sends an on-demand request message to the data stream device corresponding to the ID to be on demand.

At step S414, after receiving the on-demand request message, the data stream device corresponding to the ID to be on demand sends data to the data distribution unit.

At step S415, after receiving the data packet, the data distribution unit searches the data distribution mapping table. In the case that the destination address and the destination port number corresponding to both the source address and the source port number carried by the data packet can be found in the data distribution mapping table, the data distribution unit forwards the data packet to the corresponding external device at step S416; or, in the case that the destination address and the destination port number corresponding to both the source address and the source port number carried by the data packet cannot be found in the data distribution mapping table, the data packet is directly discarded.

It can be known from the above that, according to the method and the system for network communication of the embodiments, for the scene of Docker container application deployment, the iptables-based forwarding and the application forwarding are combined, such that for realizing the data forwarding of multiple ports in the Docker container, the Docker container only needs to expose a pair of first ports on the host computer, and the pair of first ports are configured to transmit data, whereby the complexity of Docker container port management is reduced, the efficiency of data transmission is improved, the operation and maintenance management is facilitated and the reliability of the Docker container is improved.

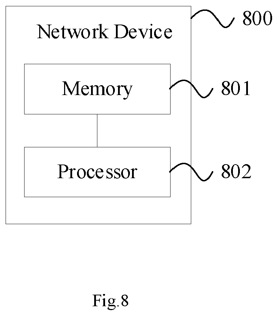

Fig. 8 is a schematic diagram of a network device according to an embodiment of the present disclosure. As shown in Fig. 8, the network device 800 is provided (e.g., a host device in which a Docker container is deployed), including a memory 801 and a processor 802. The memory 801 is configured to store a network communication program which, when executed by the processor 802, causes the processor 802 to perform the methods for network communication according to the above embodiments, for example, the steps shown in Fig. 3. It can be understood by those having ordinary skills in the art that, the structures shown in Fig. 8 are some structures related to the scheme of the present disclosure, and does not constitute a limitation of the network device 800 to which the scheme of the present disclosure is applied. The network device 800 may include more or fewer components, a combination of some components, or a different arrangement of components than shown in Fig. 8.

The processor 802 may include, but is not limited to, a processing device such as a Microcontroller Unit (MCU) or a Field Programmable Gate Array (FPGA). The memory 801 is configured to store software programs and modules of application software, such as program instructions or modules corresponding to the method for network communication in this embodiment. The processor 802 runs the software programs and modules stored in the memory 801 to execute various functional applications and data processing, such as realizing the method for network communication of this embodiment. The memory 801 may include a high-speed random-access memory, and may also include a non-volatile memory, such as at least one magnetic storage device, flash memory, or other non-volatile solid-state memory. In some examples, the memory 801 may include memories remotely located with respect to the processor 802, and these remote memories may be connected to the network device 800 over a network. Examples of the above network include, but are not limited to, Internet, intranet, local area network (LAN), mobile communication network and combinations thereof.

In addition, according to some embodiments of the present disclosure, a computer readable medium is also provided, which stores a network communication program which, when executed by a processor, causes the processor to perform the methods for network communication according to the above embodiments, for example, the steps shown in Fig. 3.

It can be understood by those having ordinary skill in the art that all or some of the steps of the methods, systems and functional modules/units in the devices disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or a step may be performed by several physical components in cooperation. Some or all of the components may be implemented as software executed by a processor, such as a digital signal processor or a microprocessor, or as hardware, or as an integrated circuit, such as an application specific integrated circuit. Such software may be distributed on a computer readable media, which may include a computer storage media (or non-transitory media), and a communication media (or transitory media). As well known to those having ordinary skills in the art, the term "computer storage medium" includes volatile and non-volatile, removable and non-removable media for storing information (such as computer readable instructions, data structures, program modules or other data) implemented in any method or technology. The computer storage media include, but are not limited to, random access memory (RAM), read-only memory (ROM), electrically erasable programmable read-only Memory, EEPROM), flash memory or other memory technologies, compact disc read-only memory (CD-ROM), digital video disc (DVD) or other optical disc storage, magnetic box, magnetic tape, magnetic disk storage or other magnetic storage devices, or any other medium that can be used to store desired information and can be accessed by a computer. In addition, it is well known to those having ordinary skills in the art that the communication media typically contains computer readable instructions, data structures, program modules or other data in a modulated data signal such as a carrier wave or other transmission mechanism, and may include any information delivery media.

## Claims

1. A method for network communication, comprising:
determining a data forwarding rule in a Docker container (S201) by a data distribution unit deployed in the Docker container, wherein a pair of first ports and a second port of the Docker container are mapped to ports of a host computer in which the Docker container is located, and at least one channel of data is transmitted by the pair of first ports;
according to the data forwarding rule, forwarding a data packet received via the first ports to an application deployed in the Docker container by the data distribution unit, or forwarding a data packet sent by the application deployed in the Docker container to an external device via the first ports (S202);
acquiring communication link information of each channel of data;
wherein, determining the data forwarding rule of the Docker container comprises:
determining, according to the communication link information of each channel of data, the data forwarding rule of the Docker container; and
wherein acquiring the communication link information of each channel of data comprises:
determining a source address and a source port for a channel of data to be received via the first ports, by performing signaling interaction with the external device via the second port; acquiring an address and a port of the Docker container to which the application is bound, from the application to receive the channel of data; and determining the communication link information of the channel of data according to the source address and the source port for the channel of data, and the address and the port of the Docker container to which the application is bound; or,
receiving a request message sent by the external device via the second port, and parsing, a destination address and a destination port for a channel of data to be sent via the first ports, and an application to send the channel of data, from the request message; acquiring the address and the port of the Docker container to which the application is bound, from the application to send the channel of data; and determining the communication link information of the channel of data according to the destination address and the destination port of the channel of data, and the address and the port of the Docker container to which the application is bound.

2. The method of claim 1, wherein the data forwarding rule records information of a data source and a data destination of each channel of data; and wherein the data source or the data destination is the application deployed in the Docker container.

3. The method of claim 2, wherein the information of the data source comprises a source address and a source port, and the information of the data destination comprises a destination address and a destination port; and wherein the source port or the destination port is a port to which the application deployed in the Docker container is bound.

4. The method of claim 3, wherein, according to the data forwarding rule, forwarding the data packet received via the first ports to the application deployed in the Docker container comprises:
determining the destination port corresponding to both the source address and the source port carried by the data packet received via the first ports by querying the data forwarding rule; and
forwarding the data packet to the application bound to the destination port in the Docker container.

5. The method of claim 3, wherein, according to the data forwarding rule, forwarding the data packet sent by the application deployed in the Docker container to the external device via the first ports comprises:
determining an Internet Protocol address and a port of the external device corresponding to the port to which the application sending the data packet in the Docker container is bound by querying the data forwarding rule; and
forwarding the data packet to the external device via the first ports.

6. A system for network communication, comprising a data distribution unit (112) and a network application unit (114), wherein the data distribution unit (112) and the network application unit (114) are deployed in a Docker container (11), wherein a pair of first ports and a second port of the Docker container (11) are mapped to ports of a host computer in which the Docker container (11) is located, and the network application unit (114) comprises at least one application, and at least one channel of data is transmitted by the pair of first ports;
the data distribution unit (112) is configured to determine a data forwarding rule of the Docker container (11), and configured to, according to the data forwarding rule, forward a data packet received via the first ports to an application in the network application unit (114), or forward a data packet sent by the application in the network application unit (114) to an external device (10) via the first ports;
a signaling processing unit (110), configured to acquire communication link information of each channel of data and send the communication link information to the data distribution unit (112);
wherein the data distribution unit (110) is configured to determine the data forwarding rule of the Docker container (11) according to the communication link information of each channel of data; and
wherein the signaling processing unit (110) is configured to acquire the communication link information of each channel of data by:
determining a source address and a source port for a channel of data to be received via the first ports by performing signaling interaction with the external device (10) via the second port; acquiring, from an application to receive the channel of data, an address and a port of the Docker container (11) to which the application is bound; and determining the communication link information of the channel of data according to the source address and the source port for the channel of data, and the address and the port of the Docker container (11) to which the application is bound; or,
receiving a request message sent by the external device (10) via the second port, and parsing a destination address and a destination port of a channel of data to be sent via the first ports, and an application to send the channel of data, from the request message; acquiring, from the application to send the channel of data, the address and the port of the Docker container (11) to which the application is bound; and determining the communication link information of the channel of data according to the destination address and the destination port of the channel of data, and the address and the port of the Docker container (10) to which the application is bound.

7. The system of claim 6, wherein the data forwarding rule records information of a data source and a data destination of each channel of data; and wherein the data source or the data destination is the application in the network application unit (114).

8. The system of claim 7, wherein the information of the data source comprises a source address and a source port, and the information of the data destination comprises a destination address and a destination port; and wherein the source port or the destination port is a port to which the application in the network application unit (114) is bound.

9. A network device (800), comprising a processor (802) and a memory (801), wherein the memory (801) is configured to store a network communication program which, when executed by the processor (802), causes the processor (802) to perform the method for network communication of one of claims 1 to 5.

10. A computer readable medium storing a network communication program which, when executed by a processor, causes the processor to perform the method for network communication of one of claims 1 to 5.

## Patentansprüche

1. Verfahren zur Netzwerkkommunikation, umfassend:
Bestimmen einer Datenweiterleitungsregel in einem Docker-Container (S201) durch eine Datenverteilungseinheit, die in dem Docker-Container bereitgestellt ist, wobei ein Paar von ersten Ports und ein zweiter Port des Docker-Containers auf Ports eines Host-Computers abgebildet werden, in welchem sich der Docker-Container befindet, und wenigstens ein Datenkanal durch das Paar von ersten Ports übertragen wird;
gemäß der Datenweiterleitungsregel, Weiterleiten eines über die ersten Ports empfangenen Datenpakets an eine Anwendung, die in dem Docker-Container bereitgestellt ist, durch die Datenverteilungseinheit, oder Weiterleiten eines von der Anwendung, die in dem Docker-Container bereitgestellt ist, gesendeten Datenpakets an ein externes Gerät über die beiden ersten Ports (S202);
Erlangen von Kommunikationslink-Informationen jedes Datenkanals;
wobei das Bestimmen der Datenweiterleitungsregel des Docker-Containers umfasst:
Bestimmen, gemäß der Kommunikationslink-Informationen jedes Datenkanals, der Datenweiterleitungsregel des Docker-Containers; und
wobei das Erlangen der Kommunikationslink-Informationen jedes Datenkanals umfasst:
Bestimmen einer Quell-Adresse und eines Quell-Ports für einen Datenkanal, der über die ersten Ports empfangen werden soll, durch Durchführen einer Signalinteraktion mit dem externen Gerät über den zweiten Port; Erlangen einer Adresse und eines Ports des Docker-Containers, an den die Anwendung gebunden ist, von der Anwendung, um den Datenkanal zu empfangen; und Bestimmen der Kommunikationslink-Informationen des Datenkanals gemäß der Quell-Adresse und dem Quell-Port für den Datenkanal, und der Adresse und dem Port des Docker-Containers, an den die Anwendung gebunden ist; oder,
Empfangen einer Anfragenachricht, gesendet von dem externen Gerät über den zweiten Port, und Parsen, einer Ziel-Adresse und eines Ziel-Ports für einen Datenkanal, der über die ersten Ports gesendet werden soll, und einer Anwendung zum Senden des Datenkanals, von der Anfragenachricht; Erlangen der Adresse und des Ports des Docker-Containers, an den die Anwendung gebunden ist, von der Anwendung zum Senden des Datenkanals; und Bestimmen der Kommunikationslink-Informationen des Datenkanals gemäß der Ziel-Adresse und dem Ziel-Port des Datenkanals, und der Adresse und des Ports des Docker-Containers, an den die Anwendung gebunden ist.

2. Verfahren nach Anspruch 1, wobei die Datenweiterleitungsregel Informationen einer Datenquelle und eines Datenziels jedes Datenkanals aufzeichnet; und wobei die Datenquelle oder das Datenziel die Anwendung, die in dem Docker-Container bereitgestellt ist, ist.

3. Verfahren nach Anspruch 2, wobei die Informationen der Datenquelle eine Quell-Adresse und einen Quell-Port umfassen, und die Informationen des Datenziels eine Ziel-Adresse und einen Ziel-Port umfassen; und wobei der Quell-Port oder der Ziel-Port ein Port ist, an den die Anwendung, die in dem Docker-Container bereitgestellt ist, gebunden ist.

4. Verfahren nach Anspruch 3, wobei gemäß der Datenweiterleitungsregel, das Weiterleiten des Datenpakets, das über die ersten Ports empfangenen wird, an die Anwendung, die in dem Docker-Container bereitgestellt ist, umfasst:
Bestimmen des Ziel-Ports, der sowohl der Quell-Adresse als auch dem Quell-Port entspricht, die von dem Datenpaket, das über die ersten Ports empfangen wird, getragen werden, durch Abfragen der Datenweiterleitungsregel; und
Weiterleiten des Datenpakets an die an den Ziel-Port des Docker-Containers gebundene Anwendung.

5. Verfahren nach Anspruch 3, wobei gemäß der Datenweiterleitungsregel, das Weiterleiten des von der Anwendung, die in dem Docker-Container bereitgestellt ist, gesendeten Datenpakets an das externe Gerät über die ersten Ports umfasst:
Bestimmen einer Internetprotokoll-Adresse und eines Ports des externen Geräts, der dem Port, an den die Anwendung, die das Datenpaket in dem Docker-Container sendet, gebunden ist, entspricht, durch Abfragen der Datenweiterleitungsregel; und
Weiterleiten des Datenpakets an das externe Gerät über die ersten Ports.

6. System zur Netzwerkkommunikation, umfassend eine Datenverteilungseinheit (112) und eine Netzwerkanwendungseinheit (114), wobei die Datenverteilungseinheit (112) und die Netzwerkanwendungseinheit (114) in einem Docker-Container (11) bereitgestellt sind, wobei ein Paar von ersten Ports und ein zweiter Port des Docker-Containers (11) auf Ports eines Host-Computers abgebildet werden, in welchem sich der Docker-Container befindet, und die Netzwerkanwendungseinheit (114) wenigstens eine Anwendung umfasst, und wenigstens ein Datenkanal durch das Paar von ersten Ports übertragen wird;
die Datenverteilungseinheit (112) ist dazu konfiguriert, eine Datenweiterleitungsregel des Docker-Containers (11) zu bestimmen, und dazu konfiguriert, gemäß der Datenweiterleitungsregel ein über die ersten Ports empfangenes Datenpaket an eine Anwendung in der Netzwerkanwendungseinheit (114) weiterzuleiten, oder ein von der Anwendung in der Netzwerkanwendungseinheit (114) gesendetes Datenpakets an ein externes Gerät (10) über die ersten Ports weiterzuleiten;
eine Signalverarbeitungseinheit (110), dazu konfiguriert, Kommunikationslink-Informationen jedes Datenkanals zu erlangen und die Kommunikationslink-Informationen an die Datenverteilungseinheit (112) zu senden;
wobei die Datenverteilungseinheit (110) dazu konfiguriert ist, die Datenweiterleitungsregel des Docker-Containers (11) gemäß der Kommunikationslink-Informationen jedes Datenkanals zu bestimmen; und
wobei die Signalverarbeitungseinheit (110) dazu konfiguriert ist, die Kommunikationslink-Informationen eines jeden Datenkanals zu erlangen durch:
Bestimmen einer Quell-Adresse und eines Quell-Ports für einen Datenkanal, der über die ersten Ports empfangen werden soll, durch Durchführen einer Signalinteraktion mit dem externen Gerät (10) über den zweiten Port; Erlangen, von einer Anwendung zum Empfangen des Datenkanals, einer Adresse und eines Ports des Docker-Containers (11), an den die Anwendung gebunden ist; und Bestimmen der Kommunikationslink-Informationen des Datenkanals gemäß der Quell-Adresse und dem Quell-Port für den Datenkanal, und der Adresse und dem Port des Docker-Containers (11), an den die Anwendung gebunden ist; oder,
Empfangen einer Anfragenachricht, gesendet von dem externen Gerät über den zweiten Port, und Parsen einer Ziel-Adresse und eines Ziel-Ports für einen Datenkanal, der über die ersten Ports gesendet werden soll, und einer Anwendung zum Senden des Datenkanals, von der Anfragenachricht; Erlangen, von der Anwendung zum Senden des Datenkanals, der Adresse und des Ports des Docker-Containers (11), an den die Anwendung gebunden ist; und Bestimmen der Kommunikationslink-Informationen des Datenkanals gemäß der Ziel-Adresse und dem Ziel-Port des Datenkanals, und der Adresse und dem Port des Docker-Containers (10), an den die Anwendung gebunden ist.

7. System nach Anspruch 6, wobei die Datenweiterleitungsregel Informationen einer Datenquelle und eines Datenziels jedes Datenkanals aufzeichnet; und wobei die Datenquelle oder das Datenziel die Anwendung in der Netzwerkanwendungseinheit (114) ist.

8. System nach Anspruch 7, wobei die Informationen der Datenquelle eine Quell-Adresse und einen Quell-Port umfassen, und die Informationen des Datenziels eine Ziel-Adresse und einen Ziel-Port umfassen; und wobei der Quell-Port oder der Ziel-Port ein Port ist, an den die Anwendung in der Netzwerkeinheit (114) gebunden ist.

9. Netzwerkgerät (800), umfassend einen Prozessor (802) und einen Speicher (801), wobei der Speicher (801) dazu konfiguriert, ein Netzwerkkommunikations-Programm zu speichern, welches, wenn es von dem Prozessor (802) ausgeführt wird, den Prozessor (802) dazu veranlasst, das Verfahren zur Netzwerkkommunikation nach einem der Ansprüche 1 bis 5 auszuführen.

10. Computerlesbares Medium, das ein Netzwerkkommunikations-Programm speichert, welches, wenn es von einem Prozessor ausgeführt wird, den Prozessor dazu veranlasst das Verfahren zur Netzwerkkommunikation nach einem der Ansprüche 1 bis 5 auszuführen.

## Revendications

1. Un procédé de communication en réseau, comprenant :
le fait de déterminer une règle de transfert de données dans un conteneur Docker (S201) par une unité de distribution de données déployée dans le conteneur Docker, une paire de premiers ports et un deuxième port du conteneur Docker étant mappés sur des ports d'un ordinateur hôte dans lequel le conteneur Docker est localisé et au moins un canal de données étant transmis par la paire de premiers ports ;
selon la règle de transmission de données, le fait de transmettre un paquet de données reçu via les premiers ports vers une application déployée dans le conteneur Docker par l'unité de distribution de données, ou de transmettre un paquet de données envoyé par l'application déployée dans le conteneur Docker vers un dispositif externe via les premiers ports (S202) ;
le fait d'acquérir des informations de liaison de communication de chaque canal de données ;
la détermination de la règle de transmission des données du conteneur Docker comprenant :
le fait de déterminer, en fonction des informations de liaison de communication de chaque canal de données, la règle de transmission des données du conteneur Docker ; et
l'acquisition des informations de liaison de communication de chaque canal de données comprenant :
le fait de déterminer une adresse source et un port source pour un canal de données à recevoir via les premiers ports, en effectuant une interaction de signalisation avec le dispositif externe via le deuxième port ; le fait d'acquérir une adresse et un port du conteneur Docker auquel l'application est liée, auprès de l'application pour recevoir le canal de données ; et le fait de déterminer les informations de liaison de communication du canal de données en fonction de l'adresse source et du port source du canal de données, et de l'adresse et du port du conteneur Docker auquel l'application est liée ; ou,
le fait de recevoir un message de requête envoyé par le dispositif externe via le deuxième port, et le fait d'analyser, à partir du message de demande, une adresse de destination et un port de destination pour un canal de données à envoyer via les premiers ports, et une application pour envoyer le canal de données ; le fait d'acquérir l'adresse et le port du conteneur Docker auquel l'application est liée, auprès de l'application pour envoyer le canal de données ; et le fait de déterminer les informations de liaison de communication du canal de données en fonction de l'adresse de destination et du port de destination du canal de données, ainsi que de l'adresse et du port du conteneur Docker auquel l'application est liée.

2. Le procédé selon la revendication 1, dans lequel la règle de transfert de données enregistre des informations d'une source de données et d'une destination de données de chaque canal de données ; et dans lequel la source de données ou la destination de données est l'application déployée dans le conteneur Docker.

3. Le procédé selon la revendication 2, dans lequel les informations de la source de données comprennent une adresse source et un port source, et les informations de destination des données comprennent une adresse de destination et un port de destination ; et dans lequel le port source ou le port de destination est un port auquel l'application déployée dans le conteneur Docker est liée.

4. Le procédé selon la revendication 3, dans lequel, selon la règle de transmission de données, le fait de transmettre le paquet de données reçu via les premiers ports vers l'application déployée dans le conteneur Docker comprend :
le fait de déterminer le port de destination correspondant à la fois à l'adresse source et au port source porté par le paquet de données reçu via les premiers ports en interrogeant la règle de transmission des données ; et
le fait de transmettre le paquet de données à l'application liée au port de destination dans le conteneur Docker.

5. Le procédé selon la revendication 3, dans lequel, selon la règle de transmission de données, la transmission du paquet de données envoyé par l'application déployée dans le conteneur Docker vers le dispositif externe via les premiers ports comprend :
le fait de déterminer une adresse de protocole Internet et un port du dispositif externe correspondant au port auquel l'application qui envoie le paquet de données dans le conteneur Docker est liée en interrogeant la règle de transfert de données ; et
le fait de transmettre le paquet de données au dispositif externe via les premiers ports.

6. Un système de communication réseau, comprenant une unité (112) de distribution de données et une unité (114) d'application réseau, l'unité (112) de distribution de données et l'unité (114) d'application réseau étant déployées dans un conteneur Docker (11), une paire de premiers ports et un deuxième port du conteneur Docker (11) étant mappés sur des ports d'un ordinateur hôte dans lequel le conteneur Docker (11) est situé, et l'unité (114) d'application réseau comprenant au moins une application, et au moins un canal de données est transmis par la paire de premiers ports ;
l'unité (112) de distribution de données est configurée pour déterminer une règle de transfert de données du conteneur Docker (11) et configurée pour, selon la règle de transfert de données, transmettre un paquet de données reçu via les premiers ports à une application dans l'unité (114) d'application réseau, ou transmettre un paquet de données envoyé par l'application dans l'unité (114) d'application réseau à un dispositif externe (10) via les premiers ports ;
une unité (110) de traitement de signalisation, configurée pour acquérir des informations de liaison de communication de chaque canal de données et pour envoyer les informations de liaison de communication à l'unité (112) de distribution de données ;
l'unité (110) de distribution de données est configurée pour déterminer la règle de transfert de données du conteneur Docker (11) en fonction des informations de liaison de communication de chaque canal de données ; et
l'unité (110) de traitement de signalisation est configurée pour acquérir les informations de liaison de communication de chaque canal de données par :
le fait de déterminer une adresse source et un port source pour un canal de données à recevoir via les premiers ports en effectuant une interaction de signalisation avec le dispositif externe (10) via le deuxième port ; le fait d'acquérir, à partir d'une application pour recevoir le canal de données, une adresse et un port du conteneur Docker (11) auquel l'application est liée ; et le fait de déterminer les informations de liaison de communication du canal de données en fonction de l'adresse source et du port source pour le canal de données, et de l'adresse et du port du conteneur Docker (11) auquel l'application est liée ; ou
le fait de recevoir un message de demande envoyé par le dispositif externe (10) via le deuxième port, et le fait d'analyser, à partir du message de demande, une adresse de destination et un port de destination d'un canal de données à envoyer via les premiers ports, et une application pour envoyer le canal de données ; le fait d'acquérir, à partir de l'application pour envoyer le canal de données, l'adresse et le port du conteneur Docker (11) auquel l'application est liée ; et le fait de déterminer les informations de liaison de communication du canal de données en fonction de l'adresse de destination et du port de destination du canal de données, et de l'adresse et du port du conteneur Docker (10) auquel l'application est liée.

7. Le système selon la revendication 6, dans lequel la règle de transfert de données enregistre des informations d'une source de données et d'une destination de données de chaque canal de données ; et dans lequel la source de données ou la destination de données est l'application dans l'unité (114) d'application réseau.

8. Le système selon la revendication 7, dans lequel les informations de la source de données comprennent une adresse source et un port source, et les informations de destination des données comprennent une adresse de destination et un port de destination ; et dans lequel le port source ou le port de destination est un port auquel l'application dans l'unité (114) d'application réseau est liée.

9. Un dispositif réseau (800), comprenant un processeur (802) et une mémoire (801), la mémoire (801) étant configurée pour stocker un programme de communication réseau qui, lorsqu'il est exécuté par le processeur (802), amène le processeur (802) à mettre en oeuvre le procédé de communication réseau selon l'une des revendications 1 à 5.

10. Un support lisible par ordinateur stockant un programme de communication réseau qui, lorsqu'il est exécuté par un processeur, amène le processeur à mettre en oeuvre le procédé de communication réseau selon une des revendications 1 à 5.
